# EUROPEAN PATENT SPECIFICATION

(11) **EP 2 547 119 B1**
(45) Date of publication and mention of the grant of the patent: **28.05.2014**
(21) Application number: 12161526.4
(22) Date of filing: 27.03.2012
(51) Int. Cl.: H04R 1/02, H04N 5/64

(54) **Loudspeaker structure for flat display**
Lautsprecherstruktur für Flachbildschirm
Structure de haut-parleur pour écran plat

(30) Priority: 11.07.2011 TW 100124537
(43) Date of publication of application: 16.01.2013
(73) Proprietor: HannStar Display Corp., Taipei County 248 (TW)
(72) Inventor: Liu, Chun-ming, New Taipei City 242 (TW); Weng, Bo-min, New Taipei City 241 (TW)
(74) Representative: Petraz, Gilberto Luigi

(56) References cited:
- EP-A1- 1 207 717
- JP-A- 2008 005 459

## Description

### TECHNICAL FIELD OF THE INVENTION

The present invention relates to a loudspeaker structure for a flat display, and more particularly, to a loudspeaker structure of a flat display which utilizes a front frame and a rear case of the flat display to be integrated extended to from a shield structure and utilizes the shield structure to form a speaker box.

### BACKGROUND OF THE INVENTION

Among current flat display products, some have built-in loudspeaker systems for satisfying the needs of audio-visual equipments. Among these displays having built-in loudspeaker systems, some will not equip speaker drivers with speaker boxes in order to reduce the cost while some high-end products will provide assemblies of the speaker drivers and the speaker boxes. That is, a high-end display is equipped with not only a speaker driver but also a speaker box designed according to the speaker driver.

The audio performance for the display products having the speaker drivers equipped therewith but without the speaker boxes is certainly much worse than that of loudspeakers having the speaker boxes. However, the display products having the speaker boxes equipped therewith cost too much. Therefore, how to develop a display product equipped with a speaker box in low cost is an importance issue in this industrial field.

### SUMMARY OF THE INVENTION

An objective of the present invention is to provide a loudspeaker structure for a flat display for reducing the cost of equipping a display product with loudspeaker and improving audio performance as well.

To achieve the above objective, the present invention is to provide a loudspeaker structure for a flat display, comprising: a front frame and a rear case which are assembled together; a first trench formed by integratedly extending from an inner surface of the front frame, the first trench has a first opening at one side and has a second opening opposite to the first opening; a speaker driver fastened into the first trench, the speaker driver seals the first opening of the first trench; and a second trench formed by integratedly extending from an inner surface of the rear case, the second trench has a third opening, the second opening of the first trench and the third opening of the second trench are overlapped, the first trench, the second trench, and the speaker driver confine a space and construct a speaker box as well.

In another aspect, the present invention provides a loudspeaker structure for a flat display, comprising: a front frame and a rear case which are assembled together; a shield structure which comprises an opening, and also comprises a plurality of walls that are extended upright from an inner surface of the front frame and the rear case and are integrated with the front frame and the rear case; and a speaker driver fastened into the shield structure, the speaker driver comprises a diaphragm which seals the opening of the shield structure and is appeared at the opening, wherein the walls of the shield structure and the speaker driver confine a space and construct a speaker box as well.

As compared to a display equipped with a speaker driver without having a speaker box, the present invention can improve audio performance for the display product with relatively low cost since the present invention utilizes the front frame and the rear case of the flat display to be integratedly extended from the inner surface thereof to form the shield structure, and the speaker box are formed by the shield structure and the speaker driver. As compared to a display equipped with a speaker box, the present invention also can reduce the cost efficiently since the speaker box is formed by the front frame 10 and the rear case 20 of the display.

### BRIEF DESCRIPTION OF THE DRAWINGS

FIG. 1 is a front view of a flat display.
FIG. 2 is a side view of a flat display.
FIG. 3 is an exploded view of a loudspeaker structure of a flat display of the present invention.
FIG. 4 is an enlarged view of the loudspeaker structure shown in FIG. 3.
FIG. 5 is a schematic diagram showing an assembled flat display.
FIG. 6 is a schematic diagram showing the loudspeaker structure shown in FIG. 5.

### DETAILED DESCRIPTION OF THE INVENTION

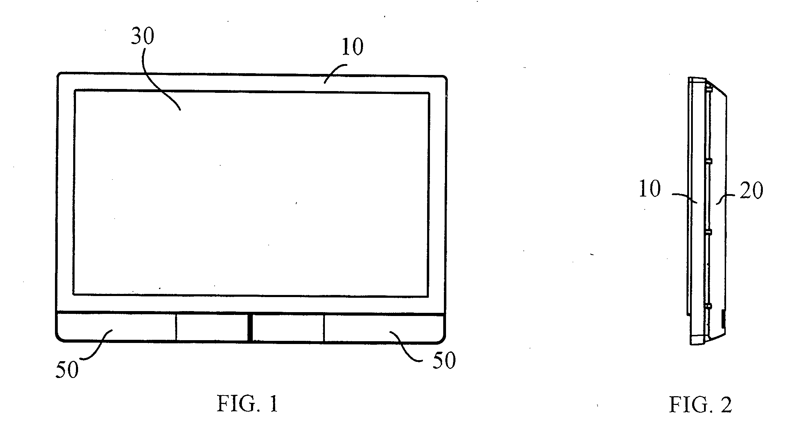

In the present invention, a front frame and a rear case used for assembling a flat display are extended integratedly to form a speaker box of a loudspeaker. In such a manner, audio performance of a display product (e.g., a flat panel television) equipped with such a loudspeaker can be improved. Referring to FIG. 1 and FIG. 2, the flat display generally comprises a display panel 30 and a backlight module (not shown). When assembling the flat display, a front frame 10 is often used to encompass and bind edges of the display panel 30, leaving a display area of the display panel 30 exposed. In addition, a rear case 20 is used to cover the backlight module and an inner circuit board (not shown) is fastened thereto. The front frame 10 and the rear case 20 are also used for assembling the display panel 30 with other inner elements (e.g., the backlight module and the circuit board) in the flat display. Loudspeakers 50 can be arranged at upper right and upper left sides, middle right and middle left sides, or lower right and lower left sides of the flat display, or their appropriate positions. In the present invention, the flat display may comprise a liquid crystal display (LCD), an organic light emitted diode display (OLED display), a plasma display panel (PDP), a field emission display (FED), and so on.

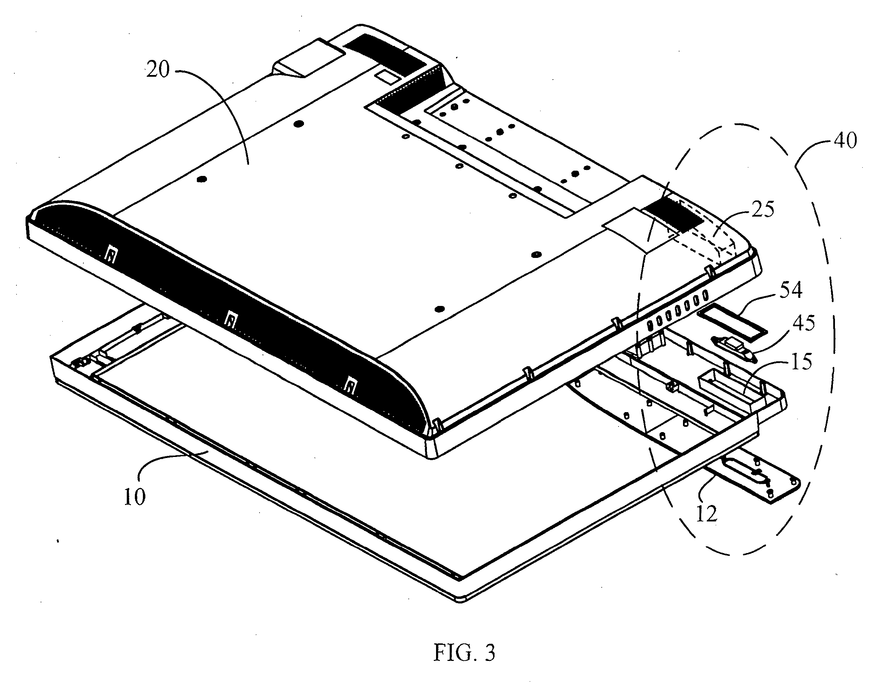

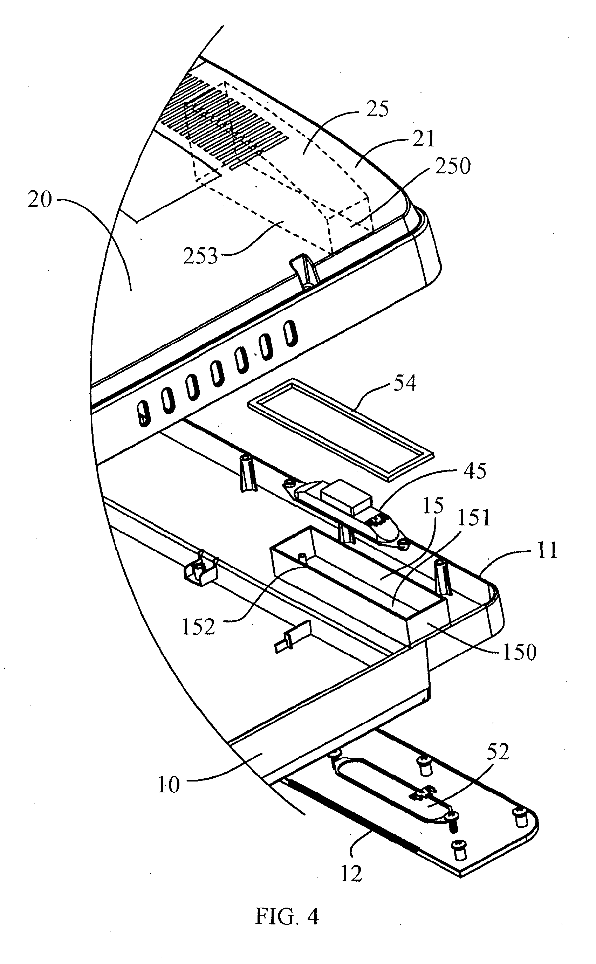

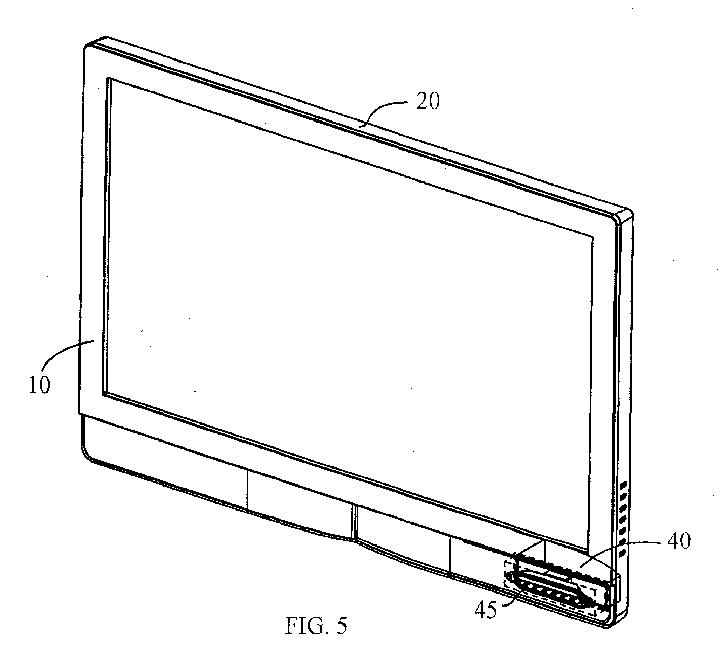

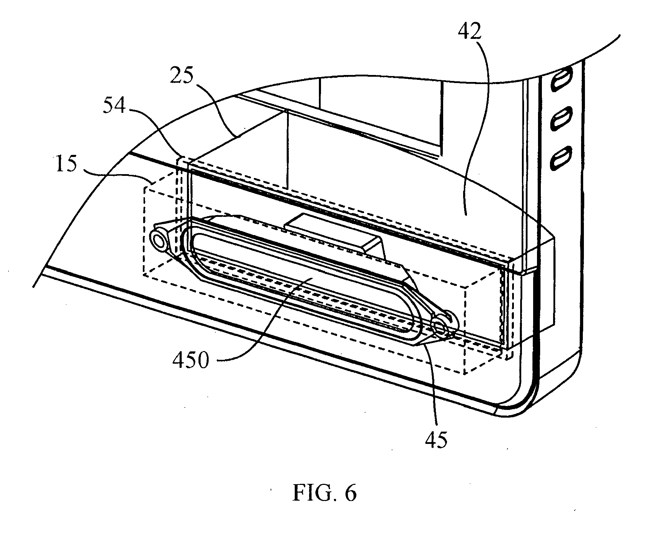

Please refer to FIG. 3 to FIG. 6. FIG. 3 is an exploded view of the loudspeaker structure of the flat display of the present invention. FIG. 4 is an enlarged view of the loudspeaker structure shown in FIG. 3. FIG. 5 and FIG. 6 are schematic diagrams respectively showing an assembled flat display and an assembled loudspeaker structure of the present invention. The loudspeaker structure 40 of the flat display of the present invention comprises a shield structure 42 and a speaker driver 45. The shield structure 42 is formed by integratedly extending the front frame 10 and the rear case 20. The shield structure 42 and the speaker driver 45 surround or confine a space and construct the speaker box as well. That is to say, the present invention utilizes the material or constituents of the front frame 10 and the rear case 20 to form the speaker box. In such a manner, the manufacturing cost of loudspeaker can be reduced and audio performance is improved as well. In one example, the shield structure 42 comprises at least one opening and a plurality of walls which are extended upright (or vertically) from an inner surface of the front frame 10 and the rear case 20. The speaker driver 45 is fastened into the shield structure 42 through the opening. A diaphragm 450 of the speaker driver 45 is disposed corresponding to the opening. The diaphragm 450 seals the opening but will be appeared at the opening of the front frame 10. That is, the diaphragm 450 is not entirely enclosed by the front frame 10. Therefore, the sound generated by vibrating the diaphragm 450 can be propagated in a direction leaving the front frame 10. The walls of the shield structure 45 and the speaker driver 45 confine a space and construct the speaker box. Also, the sound generated by vibrating the diaphragm 450 will resonate through the speaker box.

As described above, the present invention utilizes the front frame 10 and the rear case 20 of the flat display to be integratedly extended to form the speaker box during the manufacturing process. As shown in FIG. 3 and FIG. 4, the loudspeaker 40 of the flat display of the present invention comprises a first trench 15, the speaker driver 45, and a second trench 25. The first trench 15 and the second trench 25 form the shield structure 42 shown in FIG. 6. The first trench 15 is formed by integratedly extending from the inner surface of the front frame 10. Specifically, the first trench 15 comprises a plurality of first walls 150 which are extended upright (or vertically) from the inner surface of the front frame 10 and are integrated with the front frame 10. The second trench 25 is formed by integratedly extending from the inner surface of the rear case 20. Specifically, the second trench 25 comprises a plurality of second walls 250 which are extended upright from the inner surface of the rear case 20 and are integrated with the rear case 20. In concrete implementation phase, the front frame 10 is formed by plastic stamping or punching and the first trench 15 is formed together with a main body 11 of the front frame 10 during the plastic stamping process. Accordingly, the first trench 15 and the front frame 10 are made of the same material. Similarly, the rear case 20 is formed by plastic stamping or punching and the second trench 25 is formed together with a main body 21 of the rear case 20 during the plastic stamping process. Accordingly, the second trench 25 and the rear case 20 are made of the same material.

The first trench 15 formed by integratedly extending from the inner surface of the front frame 10 has a first opening 151 at one side and has a second opening 152 at another side or at an opposite side. The speaker driver 45 is placed into the first trench 15 and is fastened thereto. For example, screws or bolts are used for fastening the speaker driver 45 such that the speaker driver 45 seals the first opening 151 of the first trench 15. Specifically, the speaker driver 45 comprises the diaphragm 450 which are used to generate a sound by vibration. The diaphragm 450 faces the first opening 151 when placing the speaker driver 45 into the first trench 15. In such a manner, the diaphragm 450 completely seals the first opening 151 after the speaker driver 45 is fastened. As above, the diaphragm 45 is disposed corresponding to the first opening 151 of the first trench 15. After the front frame 10 and the rear case 20 are assembled together, the diaphragm 450 of the speaker driver 45 will be appeared at the first opening 151 of the front frame 10. That is, the diaphragm 450 is not entirely enclosed by the front frame 10 such that the sound generated by vibrating the diaphragm 450 can be propagated in a direction leaving the front frame 10.

The second trench 25 formed by integratedly extending from the inner surface of the rear case 20 has a third opening 253. The third opening 253 of the second trench 25 and the second opening 152 of the first trench 15 are of the same size. When assembling the front frame 10 and the rear case 20, the third opening 253 of the second trench 25 will be overlapped with the second opening 152 of the first trench 15. In such a manner, the first trench 15, the second trench 25, and the speaker driver 45 confine a space and construct the speaker box. The sound generated by vibrating the diaphragm 450 of the speaker driver 45 will resonate in the speaker box formed by the first trench 15 and the second trench 25, and thereby improving audio performance. In one embodiment, the fist trench 15 and the second trench 25 can be implemented by those trenches substantially having a rectangular shape, but the present invention is not limited thereto. The first trench 15 and the second trench 25 also can be implemented by those trenches substantially having a circular or elliptical shape, or other shapes.

To make sure the speaker box can be functioning stably, the loudspeaker structure 40 of the flat display of the present invention further comprises a gasket ring 54 which is disposed between the second opening 152 of the first trench 15 and the third opening 253 of the second trench 25. The shape and size of the gasket ring 54 are designed according to the second opening 152 and the third opening 253. In addition, the gasket ring 54 can be made of a material having flexibility and resistance, such as rubber. The function of the gasket ring 54 is to make sure the first trench 15 and the second trench 25 are engaged closely and prevent from a leak. In another aspect, the gasket ring 52 is also used to absorb a part of vibration generated from the speaker box, and thereby the vibration propagating to the whole display can be reduced and the images displayed on a screen of the display would not affected thereafter.

In addition, the flat display comprises an assembling board 12 which is assembled to the front frame 10. The assembling board 12 is used to shield or protect inner circuits or elements and make the display appear smooth and beauty. The assembling board 12 has a hole 52 disposed corresponding to the first opening 151 of the first trench 15. The sound generated by the diaphragm 450 of the speaker driver 45 can be spread out through the hole 52. In addition, the assembling board 12 also can be designed to have a mask (not shown) arranged corresponding to the hole 52 for decoration and/or safety reasons.

Furthermore, the speaker box of the loudspeaker structure 40 of the present invention is basically airtight. That is, the afore-said space surrounded or confined by the first trench 15, the second trench 25, and the speaker driver 45 is basically airtight. However, other embodiments intend to alter the tone and therefore drill to form a hole at a particular position of the speaker box. Such designs should be deemed as included in the realm of the present invention.

Above all, in the present invention, the inner surface of the front frame 10 and the rear frame 20 of the flat display is integratedly extended to form the respective walls 150, 250 of the first trench 15 and the second trench 25 of the shield structure 42. The walls 150, 250 of the shield structure 42 and the speaker driver 45 confine a space and are used to construct the speaker box. As compared to a display equipped with a speaker driver without having a speaker box, the present invention can improve the audio performance for the display product with relatively low cost. As compared to a display equipped with a speaker box, the present invention also can reduce the cost efficiently since the speaker box is formed by the front frame 10 and the rear case 20 of the display.

While the preferred embodiments of the present invention have been illustrated and described in detail, various modifications and alterations can be made by persons skilled in this art. The embodiment of the present invention is therefore described in an illustrative but not restrictive sense. It is intended that the present invention should not be limited to the particular forms as illustrated, and that all modifications and alterations which maintain the realm of the present invention are within the scope as defined in the appended claims.

## Claims

1. A loudspeaker structure (40) for a flat display, the flat display having a front frame (10) and a rear case (20) which are assembled together, **characterized in that** said loudspeaker structure (40) comprises:
a first trench (15) formed by integratedly extending from an inner surface of the front frame (10), the first trench (15) has a first opening (151) at one side and has a second opening (152) opposite to the first opening (151);
a speaker driver (45) fastened into the first trench (15), the speaker driver (45) seals the first opening (151) of the first trench (15); and
a second trench (25) formed by integratedly extending from an inner surface of the rear case (20), the second trench (25) has a third opening (253), the second opening (152) of the first trench (15) and the third opening (253) of the second trench (25) are overlapped, the first trench (15), the second trench (25), and the speaker driver (45) confine a space and construct a speaker box as well.

2. The structure according to Claim 1, **characterized in that** the first trench (15) comprises a plurality of first walls (150) which are extended upright from the inner surface of the front frame (10) and are integrated with the front frame (10).

3. The structure according to Claim 1, **characterized in that** the second trench (25) comprises a plurality of second walls (250) which are extended upright from the inner surface of the rear case (20) and are integrated with the rear case (20).

4. The structure according to Claim 1, **characterized in that** the first trench (15) is integrated with the front frame (10), the first trench (15) and the front frame (10) are made of the same material.

5. The structure according to Claim 1, **characterized in that** the second trench (25) is integrated with the rear case (20), the second trench (25) and the rear case (20) are made of the same material.

6. The structure according to Claim 1, **characterized in that** the speaker driver (45) comprises a diaphragm (450) which is disposed corresponding to the first opening (151) of the first trench (15), the diaphragm (450) is appeared at the first opening (151) of the front frame (10).

7. The structure according to Claim 1, **characterized in that** said loudspeaker structure (40) further comprises a gasket ring (54) which is disposed between the second opening (152) of the first trench (15) and the third opening (253) of the second trench (25).

8. The structure according to Claim 7, **characterized in that** a material of the gasket ring (54) comprises rubber.

9. The structure according to Claim 1, **characterized in that** the speaker box is airtight.

10. The structure according to Claim 1, **characterized in that** the second opening (152) of the first trench (15) and the third opening (253) of the second trench (25) are of the same size.

11. The structure according to Claim 1, **characterized in that** the first trench (15) and the second trench (25) are rectangular in shape.

12. The structure according to Claim 1, **characterized in that** the loudspeaker structure (40) further comprising an assembling board (12) which is assembled to the front frame (10), the assembling board (12) has a hole (52) corresponding to the first opening (151) of the first trench (15).

## Patentansprüche

1. Lautsprecherstruktur (40) für einen Flachbildschirm, wobei der Flachbildschirm einen Frontrahmen (10) und ein Rückgehäuse (20) aufweist, die zusammengebaut sind, **dadurch gekennzeichnet, dass** die Lautsprecherstruktur (40) Folgendes umfasst:
einen ersten Sitz (15), der dadurch ausgebildet ist, indem er sich in integrierter Weise von einer Innenfläche des Frontrahmens (10) erstreckt, wobei der erste Sitz (15) eine erste Öffnung (151) an einer Seite und eine, der ersten Öffnung (151) gegenüberliegende, zweite Öffnung (152) aufweist;
einen Lautsprechertreiber (45), der in den ersten Sitz (15) hinein befestigt ist, wobei der Lautsprechertreiber (45) die erste Öffnung (151) des ersten Sitzes (15) abdichtet; und
einen zweiten Sitz (25), der dadurch ausgebildet ist, indem er sich in integrierter Weise von einer Innenfläche des Rückgehäuses (20) erstreckt, wobei der zweite Sitz (25) eine dritte Öffnung (253) aufweist, die zweite Öffnung (152) des ersten Sitzes (15) und die dritte Öffnung (253) des zweiten Sitzes (25) sich überlappen, der erste Sitz (15), der zweite Sitz (25) und der Lautsprechertreiber (45) einen Raum begrenzen und ebenfalls eine Lautsprecherbox bilden.

2. Struktur nach Anspruch 1, **dadurch gekennzeichnet, dass** der erste Sitz (15) eine Vielzahl von ersten Wänden (150) umfasst, die sich von der Innenfläche des Frontrahmens (10) aufrecht erstrecken und mit dem Frontrahmen (10) integriert sind.

3. Struktur nach Anspruch 1, **dadurch gekennzeichnet, dass** der zweite Sitz (25) eine Vielzahl von zweiten Wänden (250) umfasst, die sich von der Innenfläche des Rückgehäuses (20) aufrecht erstrecken und mit dem Rückgehäuse (20) integriert sind.

4. Struktur nach Anspruch 1, **dadurch gekennzeichnet, dass** der erste Sitz (15) mit dem Frontrahmen (10) integriert ist, wobei der erste Sitz (15) und der Frontrahmen (10) aus demselben Material bestehen.

5. Struktur nach Anspruch 1, **dadurch gekennzeichnet, dass** der zweite Sitz (25) mit dem Rückgehäuse (20) integriert ist, wobei der zweite Sitz (25) und das Rückgehäuse (20) aus demselben Material bestehen.

6. Struktur nach Anspruch 1, **dadurch gekennzeichnet, dass** der Lautsprechertreiber (45) ein Diaphragma (450) umfasst, das entsprechend der ersten Öffnung (151) des ersten Sitzes (15) angeordnet ist, wobei das Diaphragma (450) an der ersten Öffnung (151) des Frontrahmens (10) sichtbar ist.

7. Struktur nach Anspruch 1, **dadurch gekennzeichnet, dass** die Lautsprecherstruktur (40) ferner einen Dichtungsring (54) umfasst, der zwischen der zweiten Öffnung (152) des ersten Sitzes (15) und der dritten Öffnung (253) des zweiten Sitzes (25) angeordnet ist.

8. Struktur nach Anspruch 7, **dadurch gekennzeichnet, dass** ein Material des Dichtungsrings (54) Gummi umfasst.

9. Struktur nach Anspruch 1, **dadurch gekennzeichnet, dass** die Lautsprecherbox luftdicht ist.

10. Struktur nach Anspruch 1, **dadurch gekennzeichnet, dass** die zweite Öffnung (152) des ersten Sitzes (15) und die dritte Öffnung (253) des zweiten Sitzes (25) gleich groß sind.

11. Struktur nach Anspruch 1, **dadurch gekennzeichnet, dass** der erste Sitz (15) und der zweite Sitz (25) eine rechteckige Form aufweisen.

12. Struktur nach Anspruch 1, **dadurch gekennzeichnet, dass** die Lautsprecherstruktur (40) ferner eine Montageplatte (12) aufweist, die an dem Frontrahmen (10) montiert ist, wobei die Montageplatte (12) ein Loch (52) aufweist, das der ersten Öffnung (151) des ersten Sitzes (15) entspricht.

## Revendications

1. Structure de haut-parleur (40) pour un écran plat, l'écran plat comportant un encadrement avant (10) et un boîtier arrière (20), qui sont assemblés l'un à l'autre, **caractérisée en ce que** ladite structure de haut-parleur (40) comprend:
un premier creux (15) formé par une extension intégrée d'une surface intérieure de l'encadrement avant (10), le premier creux (15) ayant une première ouverture (151) sur un côté et une deuxième ouverture (152) en face de la première ouverture (151);
un moteur de haut-parleur (45) fixé à l'intérieur du premier creux (15), le moteur de haut-parleur (45) scellant la première ouverture (151) du premier creux (15); et
un second creux (25) formé par une extension intégrée d'une surface intérieure du boîtier arrière (20), le second creux (25) ayant une troisième ouverture (253), la deuxième ouverture (152) du premier creux (15) et la troisième ouverture (253) du second creux (25) étant superposées, le premier creux (15), le second creux (25) et le moteur de haut-parleur (45) délimitant un espace et réalisant également une boîte de haut-parleur.

2. Structure selon la revendication 1, **caractérisée en ce que** le premier creux (15) comprend une pluralité de premières parois (150), s'étendant verticalement de la surface intérieure de l'encadrement avant (10) et intégrées avec l'encadrement avant (10).

3. Structure selon la revendication 1, **caractérisée en ce que** le second creux (25) comprend une pluralité de secondes parois (250), s'étendant verticalement de la surface intérieure du boîtier arrière (20) et intégrées avec le boîtier arrière (20).

4. Structure selon la revendication 1, **caractérisée en ce que** le premier creux (15) est intégré avec l'encadrement avant (10), le premier creux (15) et l'encadrement avant (10) étant réalisés dans la même matière.

5. Structure selon la revendication 1, **caractérisée en ce que** le second creux (25) est intégré avec le boîtier arrière (20), le second creux (25) et le boîtier arrière (20) étant réalisés dans la même matière.

6. Structure selon la revendication 1, **caractérisée en ce que** le moteur de haut-parleur (45) comprend une membrane (450) qui se trouve en correspondance avec la première ouverture (151) du premier creux (15), la membrane (450) étant exposée à la première ouverture (151) de l'encadrement avant (10).

7. Structure selon la revendication 1, **caractérisée en ce que** ladite structure de haut-parleur (40) comprend également un joint torique (54) interposé entre la deuxième ouverture (152) du premier creux (15) et la troisième ouverture (253) du second creux (25).

8. Structure selon la revendication 7, **caractérisée en ce qu'**une matière du joint torique (54) comprend du caoutchouc.

9. Structure selon la revendication 1, **caractérisée en ce que** la boîte du haut-parleur est imperméable à l'air.

10. Structure selon la revendication 1, **caractérisée en ce que** la deuxième ouverture (152) du premier creux (15) et la troisième ouverture (253) du second creux (25) ont les mêmes dimensions.

11. Structure selon la revendication 1, **caractérisée en ce que** le premier creux (15) et le second creux (25) sont de forme rectangulaire.

12. Structure selon la revendication 1, **caractérisée en ce que** ladite structure de haut-parleur (40) comprend également une planche d'assemblage (12), assemblée à l'encadrement avant (10), la planche d'assemblage (12) ayant un trou (52) correspondant à la première ouverture (151) du premier creux (15).
